Europäisches Patentamt

European Patent Office

Office européen des brevets

(11) Veröffentlichungsnummer: **0 454 284 A1**

## (12) EUROPÄISCHE PATENTANMELDUNG

(21) Anmeldenummer: 91250113.7

(22) Anmeldetag: 25.04.91

(51) Int. Cl.5: **G01J 3/12**

(30) Priorität: 27.04.90 DD 340209

(43) Veröffentlichungstag der Anmeldung:
30.10.91 Patentblatt 91/44

(84) Benannte Vertragsstaaten:
CH DE FR GB IT LI NL

(71) Anmelder: ZENTRALINSTITUT FÜR OPTIK UND
SPEKTROSKOPIE
Rudower Chaussee, 6
O-1199 Berlin(DE)

(72) Erfinder: Florek, Stefan, Dr. Dipl.-Phys.
Schillerstrasse 7
O-1183 Berlin(DE)
Erfinder: Güther, Reiner, Dr.
Agavensteig 53
O-1195 Berlin(DE)
Erfinder: Becker-Ross, Helmut, Dr. Dipl.-Phys.
Karlstrasse 26
O-1170 Berlin(DE)

(54) **Spektrometer.**

(57) Die Erfindung betrifft ein Spektrometer, das in der Spektroskopie für die Analysenmeßtechnik eingesetzt werden kann.

Die Erfindung ist dadurch gekennzeichnet, daß bei einem Spektrometer zwischen Eintrittsspalt (7) und Beugungsgitter (2) als Element zur Bildfeldebnung ein mit mindestens zwei optisch wirksamen Flächen versehener Körper (9,10) geringer Brechkraft und merklichem sekundären Spektrum angeordnet ist.

EP 0 454 284 A1

Die Erfindung betrifft ein Spektrometer, das in der Spektroskopie für die Analysenmeßtechnik eingesetzt werden kann.

Wichtige Grundtypen von Monochromatoren, bei denen nur eine Farbe aus einem Spektrum ausgeblendet wird, und Polychromatoren, bei denen ganze Spektralbereiche simultan mit Hilfe von flächenhaften Empfängern, wie Photoplatten oder Empfängerarrays, aufgezeichnet werden, sind in J.A. Samson, "Techniques of Vacuum Ultraviolet Spectroscopy" New York: Wiley 1967 oder auch in W. Werner, "Imaging Properties of Differection Gratings" Thesis, Uitgeverij Waltman, Dalft, 1970 beschrieben.

Weiterhin ist bekannt, daß in Monochromatoranordnungen an der Stelle des Austrittsspaltes ein flächenhafter ebener oder gekrümmter Empfänger stehen kann, auf dem im Sinne eines Polychromators ein ganzes Spektrum auftritt. Solch ein Gerät ist der in der DE-PS 2 829 802 (G 01 J, 3/18) beschriebene Polychromator, in dem auf einer ebenen Empfängerzeile jeweils ein anderer Teil des Spektrums erscheint, wenn ein entsprechend korrigiertes holographisches Konkavgitter, das den Eintrittsspalt auf diese Empfängerzeile abbildet, um seinen Scheitel gedreht wird. Weitere Polychromatoren auf der Basis von Konkavgittern sind aus DE-PS 2 656 119 (G 01 J, 3/18), DD-PS 251 837 (G 02 B, 5/32), US-PS 4,568,187 (G 01 J, 3/20) und EP 156 232 (G 01 J, 3/18) bekannt.

Aus der SU-PS 1 358 538 (G 01 J, 3/18) ist ein Spektrograph auf der Basis eines in der unmittelbaren Umgebung des Rowlandkreises korrigierten holographischen Konkavgitters bekannt, bei dem das in der Nähe des Rowlandkreises entstehende gekrümmte Spektrum unter Verwendung einer Bildfeldebnungslinse an einen ebenen Empfänger angepaßt wird. Alle bisherigen Lösungen sind entweder mit niedriger. Auflösung auf ein geebnetes Bildfeld korrigiert oder mit höherer Auflösung auf ein gekrümmtes Bildfeld ausgerichtet. Ein gekrümmtes Bildfeld ist aber nicht an eine technologisch einfach herzustellende ebene Empfängerzeile angepaßt. Die in der SU-PS 135 853 8 beschriebene Bildfeldebnungslinse dicht vor dem Empfänger hat den Nachteil, daß sie bei korrektionstechnisch günstigen Gitteraufstellungen schräg beleuchtet wird und damit bei der technologisch erforderlichen Linsendicke zu Aberrationen schiefer Bündel führt. Darüber hinaus bewirkt die Ebnungslinse direkt vor der Empfängerzeile eine Erhöhung des Streu- und Falschlichtanteils innerhalb des Spektrums.

Der Erfindung liegt die Aufgabe zugrunde, eine Anordnung für ein Spektrometer anzugeben, bei der eine Ebnung des Bildfeldes erfolgt, ohne daß Aberrationen schiefer Bündel auftreten sowie eine Erhöhung des Streu- und Falschlichtanteils innerhalb des Spektrums vermieden wird.

Die Aufgabe wird bei einem Spektrometer, im wesentlichen bestehend aus einem Eintrittsspalt, einem abbildenden Beugungsgitter, einer ebenen Empfängeranordnung und einem Element zur Bildfeldebnung, erfindungsgemäß dadurch gelöst, daß als Element zur Bildfeldebnung zwischen Lichtquelle und Gitter ein mit mindestens zwei optisch wirksamen Flächen versehener Körper geringer Brechkraft und merklichem sekundären Spektrum angeordnet ist.

Dabei kann der zwischen Eintrittsspalt und Beugungsgitter angeordnete Körper entweder als Meniskus mit vernachlässigbarem sphäreischen Fehler oder als planparallele Platte ausgebildet sein.

Eine weitere erfindungsgemäße Ausführungsform besteht darin, daß dieser Körper auf der dem Gitter abgewandten Seite als Planfläche ausgebildet ist, die den Eintrittsspalt trägt. Die Grundidee der Erfindung beruht auf der Tatsache, daß bei Verwendung eines optischen Transmissionselementes mit Dispersion fokussiertes Licht in Ausbreitungsrichtung für unterschiedliche Farben unterschiedliche Fokusweiten zeigt.

Hat der Brechungsindex einen Anteil, der quadratisch von der Wellenlänge abhängt, so wird über die damit verbundene quadratische Variation der Fokusweite mit der Wellenlänge durch die Fokalkurve eine Parabel im Raume beschrieben. Bei geeigneter Wahl der Abbildung kann die Krümmung dieser Parabel zur Kompensation der Bildfeldkrümmung verwendet werden, die durch die Abbildung mit einem abbildenden Konkavgitter entsteht.

Beispielsweise ist von einer Glasplatte bekannt, daß der Fokus eines fokussierten Bündels farbabhängig verschoben ist.

Allerdings zeigt eine Glasplatte einen großen Öffnungsfehler, so daß man nur Bündel mit geringer Apertur durch eine Glasplatte chromatisch verschieben sollte.

Die erfindungsgemäße Lehre ist auf sämtliche Spektrometertypen mit gekrümmtem Bildfeld wie Czerny-Turner-Spektrometer, Ebert-Spektrometer, Littrow-Spektrometer und Konkavgitterspektrometer, beispielsweise in Wadsworth- oder Rowlandscher Gitteraufstellung anwendbar.

Die Erfindung wird nachstehend an einem Ausführungsbeispiel näher erläutert.

Die zugehörige Zeichnung zeigt schematisch die Anordnung eines erfindungsgemäß ausgebildeten Spektrometers in Rowlandscher Gitteraufstellung.

Zunächst soll anhand der Zeichnung das Prinzip der Erfindung erläutert werden. Auf dem konkaven Gitterträger 1 sind die Furchen auf der Konkavfläche 2 aufgebracht. 3 bezeichnet den zum Gitter gehörenden Rowlandkreis, dessen Durchmesser gleich dem Krümmungsradius R der Gitterfläche ist. 4 bezeichnet den Gitterscheitel im Ursprung des X-Y-Koordinatensystems in der Symmetrieebene der Anordnung.

Die Herstellung des Gitters erfolgt durch Aufzeichnung des Interferenzfeldes, das durch die beiden punktförmigen Lichtquellen 5 mit den Polarkoordinaten $(\tau_C,\gamma)$ im X-Y-Koordinatensystem und 6 mit den Polarkoordinaten $(\tau_D,\delta)$ im X-Y-Koordinatensystem erzeugt wird.

Die beiden Lichtquellen 5; 6 müssen nicht auf dem Rowlandkreis 3 liegen. Wenn sie aber darauf liegen, so kann der Eintrittsspalt 7 am Ort 8 mit den Polarkoordinaten $(\tau_A,\alpha)$ im X-Y-Koordinatensystem auf dem Rowlandkreis zunächst ohne den erfindungsgemäßen Meniskus 9; 10 auf das Spektrum enthaltenden Bogen des Rowlandkreises von 11 über 12 nach 13 abgebildet werden. Mit dem erfindungsgemäßen Meniskus, der von der Fläche 9 mit dem Krümmungsradius $r - \Delta r$ und der Fläche 10 mit dem Krümmungsradius $r + \Delta r$ begrenzt wird und der als Zerstreuungslinse für das Bündel wirkt, muß der Spalt nicht in ursprünglicher Lage 8, sondern in der um $2(n - 1)\,\Delta r$ (n bezeichnet den Brechungsindex für die mittlere im Spektrum enthaltene Wellenlänge) nach außen verschobenen Lage 14 angeordnet werden. Dann scheint das vom Meniskus zum Gitter laufende divergente Bündel wieder von der virtuellen Lichtquelle 8 herzukommen und das Bild für die mittlere Wellenlänge würde wieder z. B. in 12 den Rowlandkreis treffen.

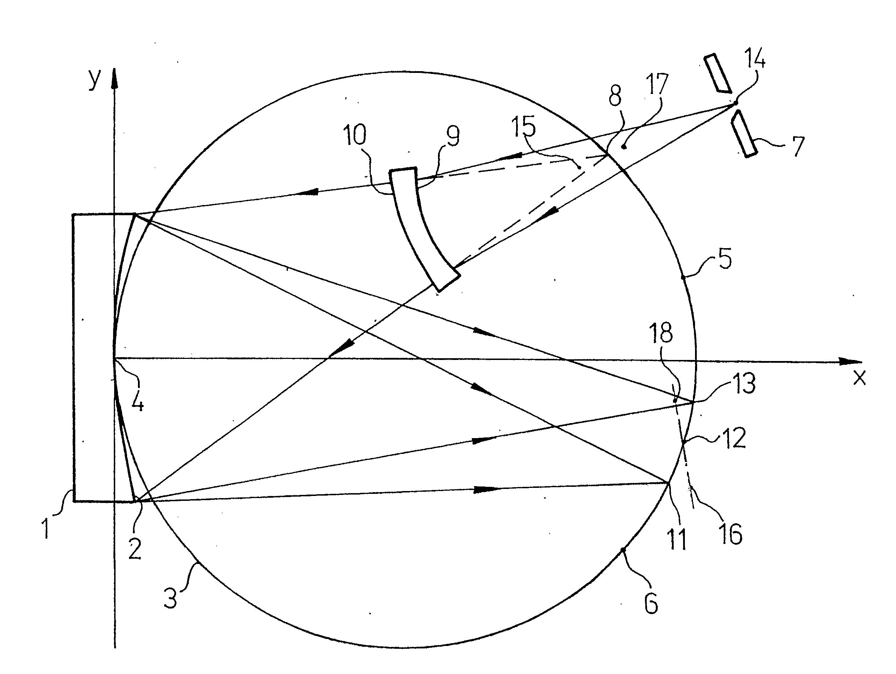

Am kurzwelligen Ende des Spektrums ist der Brechungsindex um $\Delta n_{kurz}$ erhöht, der Meniskus wirkt stärker zerstreuend, und die virtuelle Lichtquelle liegt bei 15. Dabei berechnet sich der Abstand zwischen 8 und 15 zu $(4 - \frac{2}{n})\,.\Delta n_{kurz}\,.\Delta r$. Damit verfehlt das Bild 16 von 15 den Rowlandkreis und ist um die Strecke $\overline{11; 16} = \hat{\alpha}\,(4 - \frac{2}{n})\,\Delta n_{kurz}\,.\Delta r$ nach außen verschoben, wobei $\hat{\alpha}$ den Tiefenabbildungsmaßstab bezeichnet. Desgleichen ist für das langwellige Ende die Brechungsindexvariation $\Delta n_{lang}$ ( < o) für die Verschiebung des virtuellen Bildes von 8 nach 17 um die Strecke $(4 - \frac{2}{n})\,\Delta n_{lang}\,.\Delta r$ verantwortlich, was zu einer Bildverschiebung um die Strecke $\overline{13; 18} = \hat{\alpha}\,(4 - \frac{2}{n})\,\Delta n_{lang}\,.\Delta r$ führt.

Da die Sehne des Rowlandkreises von 11 nach 13 die Länge L der Empfängerzeile darstellt, kann man die Höhe $h_m$ des Kreisabschnittes von der Sehne 11 bis 13 bis zum Punkt 12 berechnen:

$$h_m = \frac{R}{2} - \sqrt{\left(\frac{R}{2}\right)^2 - \left(\frac{L}{2}\right)^2}$$

mit R als Krümmungsradius der Gitterfläche.
Wenn nun eine Bildfeldebnung eintreten soll, müssen die Punkte 16; 12 und 18 auf einer Geraden liegen.

Daraus ergibt sich die Forderung $\overline{13; 18} + h_m = \overline{11; 16} - h_m$, woraus sich bei gegebenem R, I, n, $\Delta n_{kurz}$, $\Delta n_{lang}$ (aus der Dispersionskurve des Linsenmaterials), die Radiendifferenz $2\,\Delta r$ für den Meniskus errechnen läßt.

Bei Dicken des Meniskus von kleiner als 10 mm und üblichen Gläsern von n ≈ 1,5 ist für $\Delta r \le 6$ mm bei Öffnung 1:2 der durch Öffnungsfehler additiv zur Linienbreite des Gitters hinzukommende Öffnungsfehlerbeitrag kleiner als 2 µm, was bei der Größe üblicher Empfängerzeilen durchaus zu tolerieren ist.

Das hier an einer Rowlandkreisaufstellung erläuterte Prinzip ist auch auf allgemeine holographische Konkavgitterkonfigurationen übertragbar. Dann liegen die Lichtquellen 5 und 6 nicht auf dem Rowlandkreis. Dann ist in vorstehender Erläuterung der Rowlandkreis durch das Wort meridionale Brennkurve zu ersetzen.

Weiterhin zeigt die meridionale Brennkurve allgemeiner holographischer Gitter auch Bereiche, bei denen der Brennkurvenverlauf vom Gitterscheitel 4 aus gesehen konvex ist. Dann ist bei normalem Dispersionsverlauf des Meniskusmaterials ein sammelnder Meniskus zu verwenden.

Das hier erläuterte erfindungsgemäße Prinzip ist auch auf Polychromatoren mit mechanisch hergestellten abbildenden Gittern anwendbar.

Nach der prinzipiellen Erläuterung der Erfindung nachfolgend eine konkrete Ausführungsform gemäß der dargestellten Anordnung. Die Herstellung des Gitters erfolgt mittels der beiden Lichtquellen 5 und 6 mit den Polarkoordinaten $(\tau_C,\gamma) = (146,38$ mm; $12,62^\circ)$ und $(\tau_D,\delta) = (149,19$ mm; $5,97^\circ)$. Die polychromatische Lichtquelle liegt bei 14, deren virtuelles Bild 8 die Polarkoordinaten $(\tau_A,\alpha) = (149,65$ mm, $- 3,90^\circ)$ für die Mittenwellenlänge 375 nm des von 250 nm bis 500 nm reichenden Spektralbereichs aufweist. Für die Mittenwellenlänge betragen die Polarkoordinaten des Bildpunktes 12 $(\tau_B, 13) = (148,02$ mm; $9,31^\circ)$.

Die Herstellungskonfiguration ist so ausgelegt, daß im Punkt 12 die sagittale Brennkurve als Tangente am Rowlandkreis anliegt.

Der Radius des Gitterträgers R = 150 mm.

Die Entfernung vom Punkt 8 bis zur Fläche 9 beträgt 58 mm, der Krümmungsradius der Fläche 9 beträgt 52,1 mm, die Dicke des Meniskus 2 mm. Der Radius der Fläche 10 beträgt 65,9 mm. Die Entfernung zwischen dem virtuellen Spaltbild 8 und wirklicher Eintrittsspaltposition 14 beträgt 5,61 mm. Die Neigung des Empfängers längs der Geraden $\overline{18,;\ 12;\ 16}$ gegen die in 12 an den Rowlandkreis als Tangente anstoßende sagittale Brennkurve ist 0,068 radien. Die Auflösung beträgt im gesamten Spektralbereich 0,6 nm.

Aufstellung der verwendeten Bezugszeichen

| 1 | Gitterträger |
| 2 | konkave Gitterfläche |
| 3 | Rowlandkreis |
| 4 | Gitterscheitel |
| 5 | Lichtquelle |
| 6 | Lichtquelle |
| 7 | Eintrittsspalt |
| 8 | ursprüngliche Lage Eintrittsspalt |
| 9 | Meniskusfläche |
| 10 | Meniskusfläche |
| 11 | |
| 12 | Abbildungsorte |
| 13 | |
| 14 | verschobene Lage Eintrittsspalt |
| 15 | virtuelle Lichtquelle |
| 16 | Abbildung |
| 17 | Abbildung |
| 18 | Abbildung |

**Patentansprüche**

1. Spektrometer, im wesentlichen bestehend aus einem Eintrittsspalt, einem abbildenden Beugungsgitter, einer ebenen Empfängeranordnung und einem Element zur Bildfeldebnung, gekennzeichnet dadurch, daß als Element zur Bildfeldebnung zwischen Eintrittsspalt und Beugungsgitter ein mit mindestens zwei optisch wirksamen Flächen versehener Körper geringer Brechkraft und merklichem sekundären Spektrum angeordnet ist.

2. Spektrometer nach Anspruch 1, gekennzeichnet dadurch, daß der zwischen Eintrittsspalt und Beugungsgitter angeordnete Körper als Meniskus mit vernachlässigbarem sphärischen Fehler ausgebildet ist.

3. Spektrometer nach Anspruch 1, gekennzeichnet dadurch, daß der zwischen Eintrittsspalt und Beugungsgitter angeordnete Körper als planparallele Platte ausgebildet ist.

4. Spektrometer nach Anspruch 1, gekennzeichnet dadurch, daß der zwischen Eintrittsspalt und Beugungsgitter angeordnete Körper auf der dem Gitter abgewandten Seite als Planfläche, die den Eintrittsspalt trägt, ausgebildet ist.

Europäisches
Patentamt

EUROPÄISCHER RECHERCHENBERICHT

Nummer der Anmeldung

## EINSCHLÄGIGE DOKUMENTE

EP 91250113.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | DE - A1 - 3 516 183 (JENOPTIK) * Seite 7, Zeile 5 - Seite 8, Zeile 29; Seiten 11-13; Fig. 1 * -- | 1,4 | G 01 J 3/12 |
| P,X | EP - A1 - 0 413 939 (STARK) * Spalte 3, Zeile 55 - Spalte 4, Zeile 27; Fig. 1 * -- | 1,2 | |
| D,A | SOVIET PATENTS ABSTRACTS, Sektion EL, Woche 8851, 8. Februar 1989 DERWENT PUBLICATIONS LTD., London, S 03 * SU-1358-538 (KIT) * ---- | 1,2 | |

|  |  |  | RECHERCHIERTE SACHGEBIETE (Int. Cl.⁵) |
|---|---|---|---|
|  |  |  | G 01 J 3/00 |

Der vorliegende Recherchenbericht wurde für alle Patentansprüche erstellt.

| Recherchenort | Abschlußdatum der Recherche | Prüfer |
|---|---|---|
| WIEN | 09-07-1991 | BAUER |